# EUROPÄISCHE PATENTANMELDUNG

(11) **EP 1 052 579 A1**
(43) Veröffentlichungstag der Anmeldung: **15.11.2000**
(21) Anmeldenummer: 99440113.1
(22) Anmeldetag: 14.05.1999
(51) Int. Cl.: G06F 17/30

(54) **Verfahren zum Verwalten von Lesezeichen in einem Internet-Browser**

(71) Anmelder: ALCATEL, 75008 Paris (FR)
(72) Erfinder: Turban, Karl-Albert, 71229 Leonberg-Höfingen (DE)
(74) Vertreter: Rausch, Gabriele, Dr.

(57) **Zusammenfassung**

In einem Internet-Browser (14) kann ein Benutzer Lesezeichen setzen, um sich wichtige Quellen zu merken. Lesezeichen werden lokal in einer Lesezeichendatei gespeichert. Die Lesezeichendatei ist daher rechnerbezogen und steht dem Benutzer an anderen Arbeitsplätzen nicht zur Verfügung. Zudem kann bei einer Neuinstallation des Rechners verloren gehen.

Erfindungsgemäß wird die lokale Lesezeichendatei (15) nun regelmäßig mit Daten von einem räumlich entfernten Server (2) aktualisiert.

## Beschreibung

Die Erfindung betrifft ein Verfahren zum Verwalten von Lesezeichen in einem Internet-Browser nach dem Oberbegriff des Anspruchs 1 und einen Arbeitsplatzrechner mit einem Internet-Browser nach dem Oberbegriff des Anspruchs 12.

Internet-Browser sind allgemein bekannt und weit verbreitet. Es handelt sich dabei um ein Programm, welches den Zugriff auf Ressourcen im Internet ermöglicht. So können mit einem Internet-Browser Dateien im HTML-Formt (Hypertext Markup Language) geladen und dargestellt werden. Ebenso ermöglicht ein Internet-Browser den FTP-Zugriff (file transfer protocol) auf Fileserver. Desweiteren kann aus einem Internet-Browser ein eMail-Programm aufgerufen werden, um elektronische Post an Adressaten im Internet zu senden. Ein solcher Internet-Browser kann auch in kleineren Datennetzen, z.B. in einem Firmennetz, einem sogenannten Intranet, eingesetzt werden.

Um die Vielzahl der im Internet verfügbaren Ressourcen zur ordnen und sich wichtige Quellen zu merken, kann ein Benutzer in seinem Internet-Browser Lesezeichen (sogenannte Bookmarks) setzen. Die Lesezeichen werden in Form einer Liste oder einer hierarchischen Baumstruktur gespeichert und der Benutzer kann durch Aufrufen der Liste und einfaches Anklicken eines Eintrages jederzeit zu der "gemerkten" Quelle zurückkehren. Auf diese Weise arbeiten sowohl der Internet Explorer der Firma Microsoft als auch der Communicator der Firma Netscape.

Nachteilig wirkt sich hierbei einerseits aus, daß sich Internetadressen häufig ändern und somit gespeicherte Lesezeichen oft nicht mehr aktuell sind. Anderseits ist dieses Verfahren wenig flexibel, da die Lesezeichen dem Benutzer nur an seinem eigenen Arbeitsplatzrechner zur Verfügung stehen. An fremden Arbeitsplatzrechnern oder nach einer Neuinstallation des Internet-Browsers fehlen die Lesezeichen. So können wichtige Ressourcen im Internet oft nicht mehr oder nur nach langem Suchen wieder aufgefunden werden.

Aus dem Artikel "A bookmarking service for organizing and sharing URLs" ist ein Dienst zum netzbasierten Zugriff auf Lesezeichen bekannt. Der Dienst kann von überall aus dem Internet aufgerufen werden und wird von einem dafür vorgesehenen Proxy-Server angeboten. Der Proxy-Server verfügt über einen ersten Speicherbereich für persönliche Lesezeichen und optional über einen zweiten Speicherbereich für Lesezeichen, die einer Benutzergruppe zugeordnet sind. Die Abfrage der Lesezeichen erfolgt nach einer Art Stichwortsuche. Die Abfrage ist aufwendig und ähnelt eher der Abfrage einer Datenbank oder einer Suchmaschine im Internet als der listenbasierten Anzeige der persönlichen Lesezeichen, mit deren Umgang Benutzer bislang vertraut waren. Die Akzeptanz der Benutzer für diese Lösung wird daher gering sein. Da die Lesezeichen auf dem Proxy-Server gespeichert sind und somit bei jedem Zugriff über das Internet übertragen werden müssen, besteht zusätzlich ein Geschwindigkeitsnachteil gegenüber der lokal gespeicherten Lesezeichendatei.

Es ist demnach eine Aufgabe der Erfindung, ein Verfahren zum Verwalten von Lesezeichen anzugeben, welches flexibler ist als bisher und keine signifikanten Geschwindigkeitseinbußen gegenüber den bekannten Verfahren aufweist. Eine weitere Aufgabe der Erfindung besteht darin, ein Arbeitsplatzrechner mit einem Internet-Browser anzugeben, mit dem Lesezeichen flexibler und nicht wesentlich langsamer als bisher verwaltet werden können. Eine weitere Aufgabe der Erfindung besteht darin, einen Server anzugeben, der zur Durchführung des Verfahrens geeignet ist.

Die Aufgabe wird hinsichtlich des Verfahrens gelöst durch die Merkmale des Anspruchs 1, hinsichtlich des Arbeitsplatzrechners durch die Merkmale des Anspruchs 12 und hinsichtlich des Servers durch die Merkmale des Anspruchs 13. Vorteilhafte Ausgestaltungen sind den abhängigen Ansprüchen zu entnehmen.

Im folgenden wird die Erfindung anhand der Figuren 1 bis 3 in zwei Ausführungsbeispielen erläutert. Es zeigt:
- Figur 1:: einen Arbeitsplatzrechner und einen Server, die nach dem erfindungsgemäßen Verfahren zusammenarbeiten
- Figur 2:: ein Blockschaltbild des erfindungsgemäßen Arbeitsplatzrechners und
- Figur 3:: ein Netzwerk mit mehreren Servern, die ihre Referenzdateien gegenseitig abgleichen.

Ein Grundgedanke der Erfindung besteht darin, die Lesezeichen auf dem Arbeitsplatzrechner wie bisher üblich lokal in einer Lesezeichendatei zu speichern, diese Lesezeichendatei jedoch regelmäßig mit Informationen, die von einem räumlich entfernten Server geladen werden, zu aktualisieren. Die Aktualisierung kann z.B. bei jedem Aufruf des Internet-Browsers durchgeführt werden oder auch nur einmal am Tag.

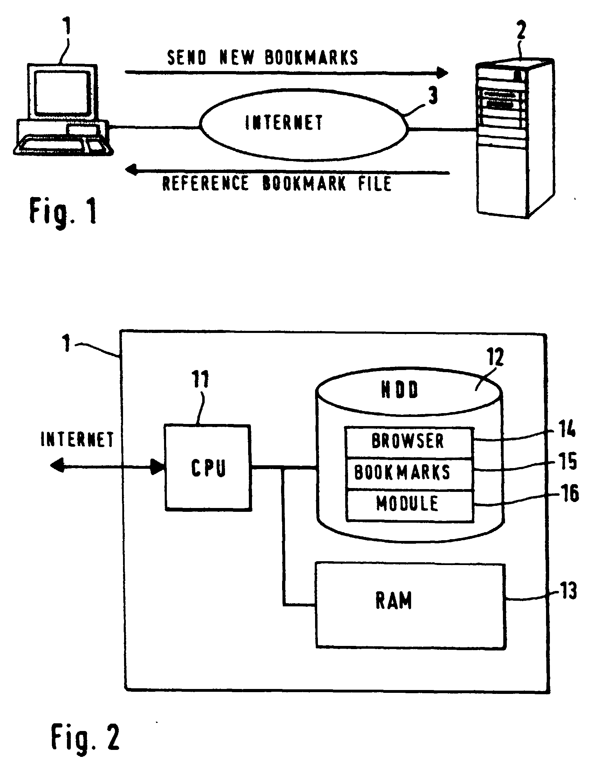

In Figur 1 ist ein Arbeitsplatzrechner 1 dargestellt, der an ein Datennetz 2 angeschlossen ist. Bei dem Datennetz 2 kann es sich um das Internet oder auch um ein firmeninternes Intranet handeln. Ein solcher Arbeitsplatzrechner wird oft auch als Workstation bezeichnet. An das Datennetz ist ebenfalls ein Server 3 angeschlossen. Der Server 3 ist von dem Arbeitsplatzrechner 1 räumlich getrennt.

Auf dem Arbeitsplatzrechner 1 ist ein Internet-Browser installiert, mit dem auf Ressourcen, z.B. HTML-Seiten in dem Datennetz zugegriffen werden kann. Die Adresse einer Ressource kann als Lesezeichen in Form einer URL (Uniform Resource Locator) für erneuten späteren Zugriff in einer lokalen Lesezeichendatei abgespeichert werden. Die Lesezeichendatei ist in einem nichtflüchtigen Speicher des Arbeitsplatzrechners gespeichert.

Entsprechend dem erfindungsgemäßen Verfahren wird die Lesezeichendatei regelmäßig mit Daten von dem räumlich entfernten Server aktualisiert. Im Ausführungsbeispiel geschieht dies bei jedem Aufruf des Internet-Browsers.

Der Server 3 stellt die Daten zur Aktualisierung in Form einer Referenzdatei mit Referenzlesezeichen über das Datennetz bereit. Der Arbeitsplatzrechner 1 greift über das Datennetz auf den Server 3 zu und läd die Referenzdatei. Zur Aktualisierung wird nun die lokale Lesezeichendatei mit der geladenen Referenzdatei verglichen. Einträge, die nur in der Referenzdatei enthalten sind, werden in die Lesezeichendatei übernommen. Einträge, die in beiden Dateien enthalten sind, die jedoch in der Referenzdatei aktualisiert wurden, werden auch in der Lesezeichendatei aktualisiert. Dadurch wird zum einen gewährleistet, daß ein Benutzer nach der Aktualisierung der Lesezeichendatei zumindest einen Basissatz von Lesezeichen, die in der Referenzdatei vordefiniert sind, erhält. Zum anderen ermöglicht dieses Vorgehen, daß die Lesezeichen zentral, nämlich in dem Server, gepflegt und bei Änderungen von Internetadressen aktualisiert werden. Dem Benutzer stehen somit immer aktuelle Lesezeichen zur Verfügung.

Jedes Lesezeichen verweist auf eine Ressource im Datennetz. Als Lesezeichen wird die URL (Uniform Resource Locator) der Ressource abgespeichert, auf die verwiesen wird. Eine URL besteht aus einem Schema (scheme), das das zu benutzende Protokoll angibt, einem Servernamen, einem Pfad und einem Dateinamen. Als Schema sind inzwischen folgende Typen zulässig:

**Tabelle 1:**

| Schementypen | |
|---|---|
| Schema | Benutzung |
| ftp | Datentransfer mittels File Transfer Protocol |
| http | Hypertext Transfer Protocol |
| gopher | Gopher Protocol für Dateiensuche |
| mailto | eMail-Adresse für elektronische Post |
| news | USENET News |
| nntp | USENET News über das NNTP Protocol |
| telnet | Verweis auf eine interaktive Sitzung |
| wais | Wide Area Information Servers |
| file | Datei auf dem lokalen Rechner |
| prospero | Prospero Verzeichnis-Dienst |

Ein Beispiel für eine URL ist
http://www.alcatel.com/news/983010.htm Dabei ist "http" das Schema, danach folgt ein Doppelpunkt als Trennzeichen. "www.alcatel.com" ist der Server, auf dem sich die Ressource befindet. Die Pfadangabe ist das Verzeichnis "/news" und die Ressource selbst wird durch den Dateinamen "983010.htm" angegeben.

Es wird heute bereits über eine zukünftige, verbesserte Bezeichnung für Internet-Ressourcen nachgedacht. Diese wird als URN (uniform resource name) bezeichnet und wir derzeit bei IETF (internet engineer task force) diskutiert. Diese URN würde sich in gleicher Weise als Lesezeichen für das erfindungsgemäße Verfahren eignen.

Vorteilhaft wird vor der Aktualisierung der Lesezeichendatei eine Authentikation des Benutzers durchgeführt, in dem der Benutzer seinen Benutzernamen und/oder ein Passwort angibt. Die anschließende Aktualisierung der Lesezeichendatei ist dann benutzerabhängig, d.h. der Server stellt je nach Benutzer oder in Abhängigkeit der Benutzergruppe, welcher der jeweilige Benutzer angehört, unterschiedliche Referenzdateien bereit.

In Figur 2 ist schematisch ein Arbeitsplatzrechner 1 dargestellt, von dem aus das erfindungsgemäße Verfahren ausgeführt wird. Der Arbeitsplatzrechner 1 ist an ein Datennetz angeschlossen. Er hat einen nichtflüchtigen Speicher HDD 12, in dem der Internet-Browser 14 und die Lesezeichendatei 15 abgelegt ist. Bei Aufruf des Internet-Browsers 14 wird dieser in einen Arbeitsspeicher RAM 13 des Rechners 1 geladen und von einem Prozessor CPU 11 des Rechners ausgeführt. Regelmäßig, d.h. entweder bei jedem Aufruf des Internet-Browsers 14 oder einmal täglich, wird über das Datennetz auf den Server zugegriffen, der die Daten zur Aktualisierung der Lesezeichendatei bereitstellt. Die Daten werden über das Datennetz in den Arbeitsspeicher 13 geladen und mit der Lesezeichendatei 15 verglichen, um die Lesezeichendatei mit den Daten zu aktualisieren. Dazu ist in dem nichtflüchtigen Speicher 12 eine Programmroutine oder ein Programmodul 16 enthalten, das Vergleich und Aktualisierung durchführt, wenn es in den Arbeitsspeicher 13 geladen und ausgeführt wird.

Bei einer besonders vorteilhaften Weiterbildung der Erfindung wird die Aktualisierung vor dem Start des Internet-Browsers durchgeführt. Dies kann in Form einer Stapelverarbeitung mittels einer Stapelverarbeitungsdatei (Batch-Datei) durchgeführt werden, die bei Abarbeitung zunächst die Aktualisierung ausführt und anschließend den Internet-Browser startet. Auf diese Weise können herkömmliche Internet-Browser nach dem erfindungsgemäßen Verfahren betrieben werden.

Zusätzlich ist es vorteilhaft, wenn die Lesezeichendatei eine Versionsnummer enthält. Dadurch kann festgestellt werden, ob die Lesezeichendatei aktueller ist als die von dem Server geladene Referenzdatei. Ist dies nicht der Fall, so findet eine Aktualisierung der Lesezeichendatei statt.

In der Lesezeichendatei kann der Benutzer für jedes Lesezeichen einen beschreibenden Titel vergeben. Dieser ist nur Teil der Lesezeichendatei und wird nicht mit der Referenzdatei aktualisiert. Der beschreibende Titel ändert sich also nicht, wenn sich eine Adresse im Datennetz ändert. Für den Benutzer sind die Lesezeichen, die mit einem solchen beschreibenden Titel versehen wurden, daher leichter zu handhaben. In diesem Fall bildet die lokale Lesezeichendatei eine Metaebene zwischen der Referenzdatei und den tatsächlich im Internet-Browser verfügbaren Lesezeichen. Es ist in diesem Fall auch nicht unbedingt erforderlich, die aktualisierte Lesezeichendatei in dem nichtflüchtigen Speicher zu speichern. Vielmehr reicht es aus, die Einträge der Lesezeichendatei, d.h. die Lesezeichen selbst, nur teporär im Arbeitsspeicher zu aktualisieren. Diese bleiben dann bis zur Beendigung des Internet-Browsers erhalten und werden bei erneutem Aufruf wieder von dem Server geladen. Hierbei ist es auch möglich, eine erfindungsgemäße Aktualisierung bei jedem Aufruf eines Lesezeichens für dieses Lesezeichen durchzuführen.

Die Lesezeichen können auch in mehreren Lesezeichendateien gespeichert sein und von dem Internet-Browser zusammengeführt werden. Ebenso ist es möglich, daß der Server mehrere unterschiedliche Referenzdateien mit Lesezeichen anbietet. Dies ist z.B. sinnvoll, wenn eine Referenzdatei für den Benutzer, eine Referenzdatei für die Benutzergruppe, der der Benutzer angehört, und eine allgemeine Referenzdatei angeboten werden. Vorteilhaft ist dann, wenn die Darstellung der Lesezeichen in dem Internet-Browser derart erfolgt, daß der Benutzer unterscheiden kann, aus welcher Referenzdatei welches Lesezeichen stammt, z.B. durch verschiedene farbliche Hinterlegung.

Durch die vom Server bereitgestellten Referenzdateien wird gewährleistet, daß ein Benutzer zumindest einen vordefinierten Basissatz von Lesezeichen an jedem Arbeitsplatz, an dem er einen Internet-Browser startet, vorfindet. Zudem können die Referenzdateien zentral gewartet werden, d.h. Lesezeichen auf nicht mehr existierende oder geänderte Adressen können zentral berichtigt oder gelöscht werden. Vorteilhaft kann auch sein, wenn der Benutzer auf dem Server zumindest für seine persönliche Referenzdatei Schreibberechtigung erhält. So kann er seine persönliche Referenzdatei selbst um neue Lesezeichen ergänzen.

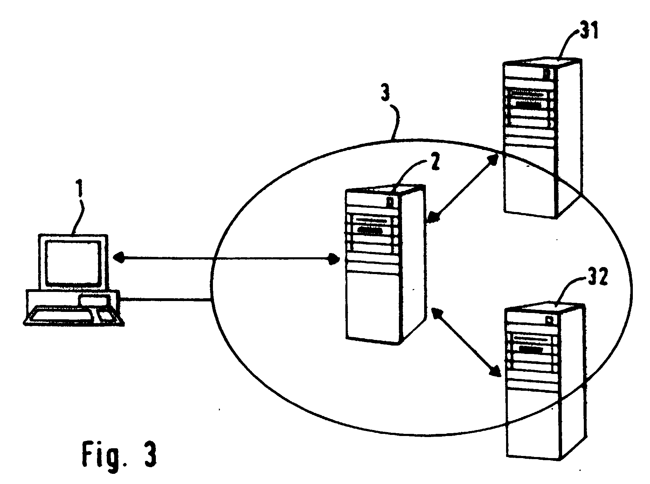

In Figur 3 ist ein weiteres vorteilhaftes Ausführungsbeispiel der Erfindung abgebildet. Ein Arbeitsplatzrechner 1 ist an ein Datennetz 3 angeschlossen. Über dieses Datennetz 3 kann der Arbeitsplatzrechner auf einen ersten entfernten Server 2 zugreifen und eine Referenzdatei zur Aktualisierung seiner internen Lesezeichendatei laden. Der erste Server 2 wiederum greift auf zwei weitere Server 31 und 32 zu, um von diesen wiederum Daten in Form von weiteren Referenzdateien zu laden, mit denen die Referenzdatei des ersten Servers aktualisiert wird. Auf diese Weise ist eine automatische Aktualisierung der über das Datennetz angebotenen Referenzdatei des ersten Servers 3 möglich.

Bei den weiteren Servern kann es sich um Datenbankserver handeln, die automatisch HTML-Seiten generieren und bereitstellen, z.B. um Lotus Domino Server. Aus dem Inhalt der auf einem Datenbankserver geführten Datenbanken läßt sich eine Referenzdatei ableiten, die alle aktuell gültigen Lesezeichen, die auf diesen Server zeigen, umfaßt. Mit solchen weiteren Referenzdateien kann die Referenzdatei des ersten Servers auf vorteilhafte Weise regelmäßig automatisch aktualisiert werden. Wird dieses Verfahren zwischen mehreren Servern ausgeführt, so entsteht ein logisches Netz in dem Lesezeichen automatisch aktualisiert werden.

## Patentansprüche

1. Verfahren zum Verwalten von Lesezeichen in einem Internet-Browser (14), bei dem die Lesezeichen in einer lokalen Lesezeichendatei (15) gespeichert werden,
**dadurch gekennzeichnet**,daß
die lokale Lesezeichendatei (15) regelmäßig mit Daten von einem räumlich entfernten Server (2) aktualisiert wird.

2. Verfahren noch Anspruch 1, bei dem für zumindest einen Teil der Lesezeichen jeweils ein beschreibender Titel vergeben wird, der zusammen mit dem zugehörigen Lesezeichen in der Lesezeichendatei (15) gespeichert wird und bei dem nur das jeweils zugehörige Lesezeichen aktualisiert wird, nicht jedoch der beschreibende Titel.

3. Verfahren nach Anspruch 1, bei dem die Lesezeichendatei (15) bei jedem Aufruf des Internet-Browsers (14) aktualisiert wird.

4. Verfahren nach Anspruch 1, bei dem die Lesezeichendatei (15) bei Aufruf des Internet-Browsers (14), jedoch höchstens einmal täglich aktualisiert wird.

5. Verfahren nach Anspruch 1, bei dem die Lesezeichen URLs sind, die jeweils aus einer Schemenongabe, die das zu benutzende Protokoll angibt, einem Servernamen, einem Pfad und einem Dateinamen bestehen.

6. Verfahren nach Anspruch 1, bei dem von dem räumlich entfernten Server (2) eine Referenzdatei geladen wird, bei dem die Referenzdatei mit der Lesezeichendatei (15) verglichen wird, bei dem Einträge, die nur in der Referenzdatei enthalten sind, in die Lesezeichendatei (15) übernommen werden und bei dem Einträge, die in beiden Dateien enthalten sind, jedoch in der Referenzdatei aktualisiert wurden, auch in der Lesezeichendatei (15) aktualisiert werden.

7. Verfahren nach Anspruch 1, bei dem vor der Aktualisierung der Lesezeichendatei (15) eine Authentikation des Benutzers durchgeführt wird und bei dem die Aktualisierung der Lesezeichendatei (15) benutzerabhängig ist.

8. Verfahren nach Anspruch 1, bei dem die Aktualisierung der Lesezeichendatei (15) vor Aufruf des Internet-Browsers (14) durchgeführt wird.

9. Verfahren nach Anspruch 8, bei dem Aktualisierung und Aufruf des Internet-Browsers (14) nacheinander mittels einer Stapelverarbeitungsdatei durchgeführt wird.

10. Verfahren nach Anspruch 8, bei dem die Lesezeichendatei (15) eine Versionsnummer enthält.

11. Verfahren nach Anspruch 1, bei dem die Daten des räumlich entfernten Servers wiederum mit Daten von weiteren räumlich entfernten Servern abgeglichen werden.

12. Arbeitsplatzrechner (1) mit einem Internet-Browser (14), wobei der Arbeitsplatzrechner (1) einen nichtflüchtigen Speicher (12) hat, in dem eine Lesezeichendatei (15) für den Internet-Browser (14) gespeichert ist, und wobei der Arbeitsplatzrechner (1) an ein Datennetz (3) angeschlossen ist,
**gekennzeichnet durch**
Mittel zum Zugreifen auf einem räumlich entfernten Server (2) über das Datennetz (3) und Mittel zum Aktualisieren der Lesezeichendatei (15) mit Daten von dem räumlich entfernten Server (2).

13. Server (2) zum Bereitstellen von Daten zur Aktualisierung einer Lesezeichendatei (15) entsprechend dem Verfahren nach Anspruch 1 oder 11.
